# EUROPÄISCHE PATENTSCHRIFT

(11) **EP 2 073 949 B1**
(45) Veröffentlichungstag und Bekanntmachung des Hinweises auf die Patenterteilung: **28.04.2010**
(21) Anmeldenummer: 07788113.4
(22) Anmeldetag: 01.08.2007
(51) Int. Cl.: B23D 49/16, B23D 59/04, B25F 5/00

(54) **HANDWERKZEUGMASCHINE**
HAND MACHINE-TOOL
MACHINE-OUTIL À MAIN

(30) Priorität: 04.09.2006 DE 102006041397
(43) Veröffentlichungstag der Anmeldung: 01.07.2009
(73) Patentinhaber: Robert Bosch GmbH, 70442 Stuttgart (DE)
(72) Erfinder: DELFINI, Stefano, CH-2544 Bettlach (CH); KAISER, Hans, CH-3297 Leuzigen (CH)
(86) Internationale Anmeldenummer: PCT/EP2007/057942
(87) Internationale Veröffentlichungsnummer: WO 2008/028728

(56) Entgegenhaltungen:
- WO-A-2006/008214
- US-A- 4 807 361

## Beschreibung

### Stand der Technik

Die Erfindung betrifft eine Handwerkzeugmaschine nach dem Oberbegriff des Anspruchs 1, bekannt aus der WO 2006/008214.

Aus der DE 10 2004 034 814 A1 ist eine Handwerkzeugmaschine mit einem Gehäuse, einer Fußplatte zum Führen auf einer Oberfläche eines Werkstücks und mit einer Pumpeneinheit zum Antreiben eines Kühl- und/oder Schmiermittelstroms zum Kühlen und/oder Schmieren von wenigstens einem stark belasteten Bauteil bekannt. Die Pumpeneinheit ist außerhalb der Handwerkzeugmaschine, also außerhalb ihres Gehäuses und ihrer Fußplatte, angeordnet, und ein den Kühl- und/oder Schmiermittelstrom tragender Luftstrom wird über einen Schlauch der Handwerkzeugmaschine zugeführt.

Die Erfindung geht aus von einer Handwerkzeugmaschine mit einem Gehäuse, einer Fußplatte zum Führen auf einer Oberfläche eines Werkstücks und mit einer Pumpeneinheit zum Antreiben eines Kühl- und/oder Schmiermittelstroms zum Kühlen und/oder Schmieren von wenigstens einem stark belasteten Bauteil. Dabei soll unter einem "stark belasteten Bauteil" insbesondere das Einsatzwerkzeug und/oder eine Lager- und/oder Führungseinheit insbesondere eines Werkzeugs der Handwerkzeugmaschine verstanden werden.

Es wird vorgeschlagen, dass die Pumpeneinheit in der Fußplatte angeordnet ist. Dadurch können eine externe Pumpeneinheit und ein Schlauch zum Zuführen des Schmiermittelstroms von der Pumpeneinheit zu der Handwerkzeugmaschine entfallen. Die Schmierung und Kühlung der Handwerkzeugmaschine bzw. des Einsatzwerkzeugs kann weniger defektanfällig gestaltet werden, wodurch die mittlere Lebensdauer der geschmierten bzw. gekühlten Elemente der Handwerkzeugmaschine verlängert werden kann.

Die Erfindung ist besonders vorteilhaft im Bereich der handgeführten Elektrosägen, beispielsweise Stichsägen, Fuchsschwänzen oder Säbelsägen, einsetzbar. Prinzipiell wäre jedoch auch ein Einsatz in anderen Geräten, beispielsweise Bohrmaschinen oder schleifenden Geräten, denkbar.

Eine Unabhängigkeit der Pumpeneinheit von der Last bzw. dem Betriebszustand der Handwerkzeugmaschine kann durch einen von der Pumpeneinheit getrennten Motor zum Antreiben eines Einsatzwerkzeugs gewährleistet werden, wobei in alternativen Ausführungsbeispielen der Erfindung auch eine Antriebsverbindung zwischen dem Motor und der Pumpeneinheit bestehen kann.

Wenn die Pumpeneinheit und der Motor eine gemeinsame Stromversorgung aufweisen, kann ein Betrieb der Pumpeneinheit besonders einfach mit einem Betrieb des Motors synchronisiert werden.

Durch die erfindungsgemäße Kühlung und/oder Schmierung kann eine Verlängerung der Lebensdauer der Handwerkzeugmaschine insbesondere dann erreicht werden, wenn das stark belastete Bauteil als Sägeblattführungseinheit zum Führen eines als Sägeblatt ausgebildeten Einsatzwerkzeugs ausgebildet ist.

Durch die erfindungsgemäße Kühlung und/oder Schmierung kann eine Verlängerung der Lebensdauer des Einsatzwerkzeugs der Handwerkzeugmaschine erreicht werden.

Eine kostengünstige Kühlung und/oder Schmierung ist insbesondere mit einer Pumpeneinheit zu erreichen, die zum Erzeugen eines Luftstroms vorgesehen ist. Unter "vorgesehen" soll in diesem Zusammenhang auch "ausgelegt" und "ausgestattet" verstanden werden. Prinzipiell wäre ein Einsatz der Erfindung aber auch im Zusammenhang beispielsweise mit einer Wasserkühlung denkbar.

Umfasst die Handwerkzeugmaschine ein Mittel zum Beimischen von Schmiermitteltröpfchen zum Luftstrom, können eine vorteilhafte Minimalmengenschmierung und eine gleichzeitige Kühlung durch den Luftstrom erreicht werden.

Das Mittel ist konstruktiv einfach insbesondere dann zu realisieren und eine kleine Tröpfchengröße des Schmiermittels kann gewährleistet werden, wenn das Mittel als wesentliches Element eine Venturidüse umfasst.

Dabei kann eine Minimalmengenschmierung, die bei dem geringsten möglichen Schmiermittelverbrauch eine deutliche Verlängerung der Lebensdauer der belasteten Bauteile ermöglicht, insbesondere dadurch erreicht werden, dass die Venturidüse derart dimensioniert ist, dass dem Luftstrom im Betrieb weniger als ein Gramm eines Schmiermittels pro Betriebsstunde beigemischt wird.

Durch einen innerhalb der Fußplatte angeordneten Schmiermittelbehälter kann insbesondere das Material der Fußplatte selbst unabhängig von der chemischen Beschaffenheit des Schmiermittels gewählt werden. Die Fußplatte kann also beispielsweise als kostengünstiges Druckgussbauteil ausgebildet sein. Das Schmiermittel kann beispielsweise einen fett- und ölhaltigen Schmierstoff, Graphit oder Ähnliches umfassen. Der separate Schmiermittelbehälter kann ferner austauschbar oder zum Nachfüllen entnehmbar sein.

Umfasst die Handwerkzeugmaschine eine Nachfüllöffnung zum Nachfüllen von Schmiermittel in den Schmiermittelbehälter, kann auf eine Entnahme des Schmiermittelbehälters zum Nachfüllen von Schmierstoff verzichtet werden.

Ein Austausch eines leeren Schmiermittelbehälters durch einen vollen Schmiermittelbehälter ist einfach erreichbar, wenn der Schmiermittelbehälter lösbar, und zwar insbesondere manuell bzw. werkzeugfrei lösbar, mit der Fußplatte verbunden ist.

Dabei kann der Austausch insbesondere dann einfach erfolgen, wenn der Schmiermittelbehälter als austauschbare Schmiermittelpatrone ausgebildet ist. Die Schmiermittelpatrone kann insbesondere durch eine sich beim Einstecken der Schmiermittelpatrone in eine entsprechende Öffnung der Fußplatte selbsttätig öffnende Verschlussöffnung charakterisiert sein.

Umfasst die Handwerkzeugmaschine ein Einstellelement zum Einstellen wenigstens einer Kenngröße des Kühl- und/oder Schmiermittelstroms, kann diese Kenngröße abhängig von dem aktuellen Einsatzgebiet der Handwerkzeugmaschine, beispielsweise abhängig von einem zu bearbeitenden Material, gewählt werden. Das Einstellelement kann besonders vorteilhaft mit Symbolen ausgestattet sein, die das zu bearbeitende Material kennzeichnen.

Dabei ist die einstellbare Kenngröße vorteilhaft derart gewählt, dass das Einstellelement zum Einstellen einer in dem Kühl- und/oder Schmiermittelstrom transportierten Schmiermittelmenge vorgesehen ist.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigt:

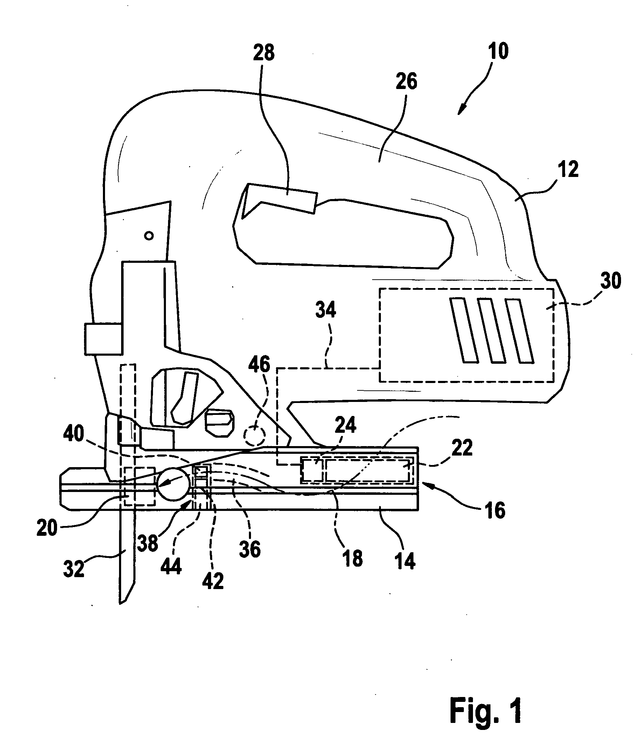

- Fig. 1: eine Handwerkzeugmaschine mit einer Fußplatte und einer in der Fußplatte angeordneten Pum- peneinheit.

### Beschreibung der Ausführungsbeispiele

Figur 1 zeigt eine als Stichsäge ausgebildete Handwerkzeugmaschine 10 mit einem Gehäuse 12, einer Fußplatte 14 zum Führen der Handwerkzeugmaschine 10 auf einer Oberfläche eines Werkstücks (hier nicht dargestellt) und mit einer Pumpeneinheit 16 zum Antreiben eines Kühl- und/oder Schmiermittelstroms 18 zum Kühlen und/oder Schmieren von wenigstens einem stark belasteten Bauteil 20.

Die Pumpeneinheit 16 der Handwerkzeugmaschine 10 hat ein Turbinenrad 22 und umfasst einen kleinen Elektromotor 24, der zusammen mit dem Turbinenrad 22 innerhalb der Fußplatte 14 angeordnet ist. Anstelle des Turbinenrads 22 könnte alternativ auch ein andersartiger Lüfter oder Ventilator zum Einsatz kommen.

Das Gehäuse 12 umfasst ferner einen Handgriff 26 zum Führen der Handwerkzeugmaschine 10 und einen im Bereich des Handgriffs 26 angeordneten Ein-/Ausschalter 28.

Die Handwerkzeugmaschine 10 umfasst einen von der Pumpeneinheit 16 getrennten Motor 30 zum Antreiben eines Einsatzwerkzeugs 32, und zwar eines Sägeblatts. Die Pumpeneinheit 16 und der Motor 30 verfügen über eine gemeinsame Stromversorgung 34, die derart gestaltet ist, dass immer dann, wenn der Motor 30 betrieben wird, notwendigerweise auch die Pumpeneinheit 16 bzw. ihr Elektromotor 24 betrieben wird.

Eines der von dem Kühl- und/oder Schmiermittelstrom 18 gekühlten und geschmierten, stark belasteten Bauteile 20 der Handwerkzeugmaschine 10 ist als Sägeblattführungseinheit ausgebildet. Die Sägeblattführungseinheit führt im Betrieb das als Sägeblatt ausgebildete Einsatzwerkzeug 32 in einer an sich bekannten Weise pendelnd nach oben und unten.

Die Pumpeneinheit 16 ist zum Erzeugen eines Luftstroms vorgesehen, und zwar in der Weise, dass sie Luft durch einen Filter oder ein Gitter von außen, und zwar von einer Oberseite der Fußplatte 14, ansaugt und unter hohem Druck in eine Kühlluftleitung 36 einleitet.

Die Kühlluftleitung 36 führt den Luftstrom durch ein Mittel 38 zum Beimischen von Schmiermitteltröpfchen zum Luftstrom. Das Mittel 38 umfasst als zentrales Element eine hier nur schematisch dargestellte Venturidüse 40.

Die Venturidüse 40 ist derart dimensioniert, dass dem Luftstrom im Betrieb weniger als ein Gramm eines Schmiermittels 42 pro Betriebsstunde beigemischt wird, so dass während eines ganztägigen Dauerbetriebs der Handwerkzeugmaschine 10 nur etwa ein Fingerhut voll des Schmiermittels 42 von dem Kühlluftstrom mitgerissen wird und zu den stark belasteten, zu kühlenden Bauteilen 20 bzw. dem Einsatzwerkzeug 32 getragen wird. Dort schlägt sich das in kleinen Tröpfchen im Kühl- und/oder Schmiermittelstrom 18 transportierte Schmiermittel 42 auf der Oberfläche der zu schmierenden, stark belasteten Bauteile 20 bzw. an dem Einsatzwerkzeug 32 nieder und führt zu einer Minimalmengenschmierung, die eine Lebensdauer der Bauteile 20 bzw. des Einsatzwerkzeugs 32 deutlich erhöht.

Gleichzeitig sorgt der überwiegende Luftanteil des aus Luft und Schmiermittel 42 bestehenden Kühl- und/oder Schmiermittelstroms 18 für eine Kühlung der betreffenden Bauteile 20 bzw. des Einsatzwerkzeugs 32. Dadurch wird insbesondere der Verschleiß am Einsatzwerkzeug 32 verringert und die Lebensdauer der gesamten Handwerkzeugmaschine 10 bzw. der betreffenden Bauteile 20 weiter erhöht.

Das Schmiermittel 42 wird dem Kühl- und/oder Schmiermittelstrom 18 über die Venturidüse 40 aus einem innerhalb der Fußplatte 14 angeordneten Schmiermittelbehälter 44 zugeführt, der in einem hier nicht dargestellten Ausführungsbeispiel eine Nachfüllöffnung zum Nachfüllen von Schmiermittel 42 in den Schmiermittelbehälter 44 umfasst.

In dem in Figur 1 dargestellten Ausführungsbeispiel ist der Schmiermittelbehälter 44 lösbar mit der Fußplatte 14 verbunden und ist zudem als austauschbare Schmiermittelpatrone ausgebildet. Die Bauart der Schmiermittelpatrone, die eine Plastikhülse und eine Verschlusskugel umfasst, kann beispielsweise der Bauart von bekannten Tintenpatronen für Füllfederhalter ähneln.

In einem alternativen Ausführungsbeispiel der Erfindung ist ein Einstellelement 46 zum Einstellen wenigstens einer Kenngröße des Kühl- und/oder Schmiermittelstroms 18, und zwar einer Intensität der durch das Schmiermittel 42 erzeugten Minimalmengenschmierung, vorgesehen. Das Einstellelement 46 ist hier nur schematisch gestrichelt dargestellt und kann vollständig mechanisch sein oder elektronisch einen Aktor betätigen.

Über das Einstellelement 46 kann in dem alternativen Ausführungsbeispiel ein Querschnitt einer Engstelle der Venturidüse 40 variiert werden. Dadurch variiert ein Unterdruck an einer Mündung des Schmiermittelbehälters 44, der durch den Druck in der Engstelle der Venturidüse 40 bestimmt ist. Durch die Änderung des Unterdrucks ändert sich die aus dem Schmiermittelbehälter 44 und in dem Kühl- und/oder Schmiermittelstrom 18 transportierte Schmiermittelmenge.

## Patentansprüche

1. Handwerkzeugmaschine mit einem Gehäuse (12), einer Fußplatte (14) zum Führen auf einer Oberfläche eines Werkstücks und mit einer Pumpeneinheit (16) zum Antreiben eines Kühl- und/oder Schmiermittelstroms (18) zum Kühlen und/oder Schmieren von wenigstens einem stark belasteten Bauteil (20), **dadurch gekennzeichnet, dass** die Pumpeneinheit (16) in der Fußplatte (14) angeordnet ist.

2. Handwerkzeugmaschine nach Anspruch 1, **gekennzeichnet durch** einen von der Pumpeneinheit (16) getrennten Motor (30) zum Antreiben eines Einsatzwerkzeugs (32).

3. Handwerkzeugmaschine nach Anspruch 2, **dadurch gekennzeichnet, dass** die Pumpeneinheit (16) und der Motor (30) eine gemeinsame Stromversorgung (34) aufweisen.

4. Handwerkzeugmaschine nach einem der vorhergehenden Ansprüche, **dadurch gekennzeichnet, dass** das stark belastete Bauteil (20) als Sägeblattführungseinheit zum Führen eines als Sägeblatt ausgebildeten Einsatzwerkzeugs (32) ausgebildet ist.

5. Handwerkzeugmaschine nach einem der vorhergehenden Ansprüche, **dadurch gekennzeichnet, dass** das stark belastete Bauteil (20) als Einsatzwerkzeug (32) ausgebildet ist.

6. Handwerkzeugmaschine nach einem der vorhergehenden Ansprüche, **dadurch gekennzeichnet, dass** die Pumpeneinheit (16) zum Erzeugen eines Luftstroms vorgesehen ist.

7. Handwerkzeugmaschine nach Anspruch 6, **gekennzeichnet durch** ein Mittel (38) zum Beimischen von Schmiermitteltröpfchen zum Luftstrom.

8. Handwerkzeugmaschine nach Anspruch 7, **dadurch gekennzeichnet, dass** das Mittel (38) eine Venturidüse (40) umfasst.

9. Handwerkzeugmaschine nach Anspruch 8, **dadurch gekennzeichnet, dass** die Venturidüse (40) derart dimensioniert ist, dass dem Luftstrom im Betrieb weniger als ein Gramm eines Schmiermittels (42) pro Betriebsstunde beigemischt wird.

10. Handwerkzeugmaschine nach einem der vorhergehenden Ansprüche, **gekennzeichnet durch** einen innerhalb der Fußplatte (14) angeordneten Schmiermittelbehälter (44).

11. Handwerkzeugmaschine nach Anspruch 10, **dadurch gekennzeichnet, dass** der Schmiermittelbehälter (44) lösbar mit der Fußplatte (14) verbunden ist.

12. Handwerkzeugmaschine nach Anspruch 11, **dadurch gekennzeichnet, dass** der Schmiermittelbehälter (44) als austauschbare Schmiermittelpatrone ausgebildet ist.

13. Handwerkzeugmaschine nach einem der vorhergehenden Ansprüche, **gekennzeichnet durch** ein Einstellelement (46) zum Einstellen wenigstens einer Kenngröße des Kühl- und/oder Schmiermittelstroms (18).

## Claims

1. Portable power tool having a housing (12), a sole plate (14) for guiding on a surface of a workpiece, and a pump unit (16) for driving a coolant and/or lubricant flow (18) for cooling and/or lubricating at least one highly loaded component (20), **characterized in that** the pump unit (16) is arranged in the sole plate (14).

2. Portable power tool according to Claim 1, **characterized by** a motor (30), separate from the pump unit (16), for driving an application tool (32).

3. Portable power tool according to Claim 2, **characterized in that** the pump unit (16) and the motor (30) have a common power supply (34).

4. Portable power tool according to one of the preceding claims, **characterized in that** the highly loaded component (20) is designed as a saw blade guide unit for guiding an application tool (32) designed as a saw blade.

5. Portable power tool according to one of the preceding claims, **characterized in that** the highly loaded component (20) is designed as an application tool (32).

6. Portable power tool according to one of the preceding claims, **characterized in that** the pump unit (16) is provided for generating an air flow.

7. Portable power tool according to Claim 6, **characterized by** a means (38) for admixing lubricant droplets to the air flow.

8. Portable power tool according to Claim 7, **characterized in that** the means (38) comprise a venturi nozzle (40).

9. Portable power tool according to Claim 8, **characterized in that** the venturi nozzle (40) is dimensioned in such a way that less than one gram of a lubricant (42) per operating hour is admixed to the air flow during operation.

10. Portable power tool according to one of the preceding claims, **characterized by** a lubricant container (44) arranged inside the sole plate (14).

11. Portable power tool according to Claim 10, **characterized in that** the lubricant container (44) is detachably connected to the sole plate (14).

12. Portable power tool according to Claim 11, **characterized in that** the lubricant container (44) is designed as an interchangeable lubricant cartridge.

13. Portable power tool according to one of the preceding claims, **characterized by** a setting element (46) for setting at least one characteristic quantity of the coolant and/or lubricant flow (18).

## Revendications

1. Machine-outil à main comprenant un boîtier (12), une plaque de base (14) à guider sur une surface d'une pièce à usiner et une unité de pompe (16) pour l'entraînement d'un courant de réfrigérant et/ou de lubrifiant (18) pour refroidir et/ou lubrifier au moins un composant (20) fortement sollicité, **caractérisée en ce que** l'unité de pompe (16) est disposée dans la plaque de base (14).

2. Machine-outil à main selon la revendication 1, **caractérisée par** un moteur (30) séparé de l'unité de pompe (16) pour l'entraînement d'un outil d'insertion (32).

3. Machine-outil à main selon la revendication 2, **caractérisée en ce que** l'unité de pompe (16) et le moteur (30) présentent une alimentation en courant commune (34).

4. Machine-outil à main selon l'une quelconque des revendications précédentes, **caractérisée en ce que** le composant (20) fortement sollicité est réalisé sous forme d'unité de guidage de lame de scie pour guider un outil d'insertion (32) réalisé sous forme de lame de scie.

5. Machine-outil à main selon l'une quelconque des revendications précédentes, **caractérisée en ce que** le composant (20) fortement sollicité est réalisé sous forme d'un outil d'insertion (32).

6. Machine-outil à main selon l'une quelconque des revendications précédentes, **caractérisée en ce que** l'unité de pompe (16) est prévue pour produire un courant d'air.

7. Machine-outil à main selon la revendication 6, **caractérisée par** un moyen (38) pour mélanger des gouttelettes de lubrifiant au courant d'air.

8. Machine-outil à main selon la revendication 7, **caractérisée en ce que** le moyen (38) comprend une buse de venturi (40).

9. Machine-outil à main selon la revendication 8, **caractérisée en ce que** la buse de venturi (40) est dimensionnée de telle sorte que moins d'un gramme d'un lubrifiant (42) par heure de fonctionnement soit ajouté au courant d'air pendant le fonctionnement.

10. Machine-outil à main selon l'une quelconque des revendications précédentes, **caractérisée par** un récipient de lubrifiant (44) disposé à l'intérieur de la plaque de base (14).

11. Machine-outil à main selon la revendication 10, **caractérisée en ce que** le récipient de lubrifiant (44) est connecté de manière détachable à la plaque de base (14).

12. Machine-outil à main selon la revendication 11, **caractérisée en ce que** le récipient de lubrifiant (44) est réalisé sous forme de cartouche de lubrifiant remplaçable.

13. Machine-outil à main selon l'une quelconque des revendications précédentes, **caractérisée par** un élément de réglage (46) pour ajuster au moins une valeur caractéristique du courant de réfrigérant et/ou de lubrifiant (18).
